(19) Europäisches Patentamt
European Patent Office
Office européen des brevets

(11) **EP 1 279 848 B2**

(12) **NEW EUROPEAN PATENT SPECIFICATION**

After opposition procedure

(45) Date of publication and mention of the opposition decision:
**16.11.2011 Bulletin 2011/46**

(45) Mention of the grant of the patent:
**07.03.2007 Bulletin 2007/10**

(21) Application number: **02100570.7**

(22) Date of filing: **28.05.2002**

(51) Int Cl.:
**F16C 33/66** (2006.01)

(54) **Method for Lubricating a Rotational Device**

Schmierungsverfahren für Umdrehungsvorrichtung

Méthode pour lubrifier un ensemble tournant

(84) Designated Contracting States:
**DE FR GB IT**

(30) Priority: **27.07.2001 JP 2001227128**

(43) Date of publication of application:
**29.01.2003 Bulletin 2003/05**

(73) Proprietor: **IMN Co., Ltd**
**Takefu-shi, 915-0861 (JP)**

(72) Inventors:
• **Matsuura, Yasumaro**
**915-0861, Takefu-shi (JP)**
• **Yamada, Kikuta**
**915-0861, Takefu-shi (JP)**
• **Tanaka, Seiji**
**915-0861, Takefu-shi (JP)**

(74) Representative: **Smee, Anthony James Michael et al**
**Gill Jennings & Every LLP**
**The Broadgate Tower**
**20 Primrose Street**
**London EC2A 2ES (GB)**

(56) References cited:

| | |
|---|---|
| **EP-A- 1 197 702** | **EP-A1- 0 639 696** |
| **EP-A1- 1 277 977** | **EP-A2- 0 374 958** |
| **DE-A- 19 959 472** | **JP-A- 06 307 458** |
| **US-A- 4 738 336** | **US-A- 4 836 334** |
| **US-A- 5 060 760** | **US-A- 5 381 874** |
| **US-A- 5 878 842** | **US-A- 5 971 107** |

• **BRONSTEIN K.A SEMENDJAJEW TASCHENBUCH DER MATHEMATIK no. 25, 01 January 1991, VERLAG HARRI DEUTSCH STUTTGART, pages 218 - 219**

EP 1 279 848 B2

**Description**

This invention relates to a method for supplying lubricant (i.e., lubricating oil or grease) to a rotational device that is employed in, for example, an electric motor or a spindle.

Grease lubrication is a method for applying a fixed quantity of grease onto preassembled bearing members. Once the machine is in use it is operated without further grease being supplied. In general, the majority of the grease applied when the bearing members are first rotated is scattered to their surroundings, and, as a result, very little grease is left on the track surface. Therefore, the lifetime of the bearing members is unpredictable.

Oil mist lubrication of a bearing involves spraying a mist of oil particles onto the rotating parts using compressed air. As a result this method, heat generation can be reduced, and the maximum speed at which the bearing can be used can be increased. However, a special oil mist generator is needed, which raises costs, and the emission of exhaust gas that include oil contaminates the surrounding environment.

Oil air lubrication of a bearing involves applying a small quantity of oil using compressed air. As a result of this method, heat generation can be reduced, and the maximum speed at which the bearing can be used can be increased. However, a special oil air-lubricating device is needed, which raises costs, and the emission of exhaust gas that include oil contaminates the surrounding environment.

Jet lubrication involves pouring a large quantity of cooled oil onto a rotational part of a bearing. This method reduces heat generation, and the maximum speed at which the bearing can be used can be increased. However, disadvantageously, very high power is required to rotate a shaft, and machines are expensive as a result of the large quantity of oil that must be maintained at a constant temperature. Therefore, this method is applied only to very limited uses, such as bearings of an aircraft engine.

All of the conventional methods described above have both advantages and disadvantages. Generally, the quantity of the lubricant required increases as the speed of the rotational bearing increases.

However, these prior art methods have no construction that allows the quantity of the lubricant supplied to be varied in accordance with a variation in rotational speed.

EP-A-1197702 is effective prior art only under Art 54(3) EPC in respect of DE and discloses a method for lubricating a rotational device, the rotational device having an inner part and an outer part in which one of the inner part and outer part is fixed, and the other of the inner part and outer part is rotated, and a rotational bearing lying between the inner and outer parts, the method comprising the step of supplying a predetermined quantity of the lubricant to the rotational bearing at predetermined time intervals and the step of adjusting either or both of the time interval and/or the amount of lubricant supplied at one time in accordance with a rotational speed.

DE-A-19959472 and US-A-5060760 disclose a method for lubricating a rotational device, the rotational device having an inner part and an outer part in which one of the inner part and outer part is fixed, and the other of the inner part and outer part is rotated, and a rotational bearing lying between the inner and outer parts.

According to the present invention, such a method is characterised by the steps of:

prestoring both a lubricant supply time interval and the lubricant supply quantity at one time that correspond to a plurality of rotational speeds in accordance with a rotational speed of the rotational bearing,

standardizing a corresponding time interval $T_0$ and a corresponding supply quantity $V_0$ at one time for a minimum value of a rotational speed $\omega_2$, larger than a rotational speed $\omega_0$ input to a computer and a maximum value of a rotational speed $\omega_1$, smaller than said rotational speed $\omega_0$,

wherein said rotational speeds $\omega_1$ and $\omega_2$ are input to the computer as a plurality of rotational speeds prestored with respect to an input signal denoting an actual rotational speed maintained for each rotational bearing;

performing the following proportional distribution calculation:

$$(T_1 - T_0) / (T_0 - T_2) = (\omega_0 - \omega_1) / (\omega_2 - \omega_0)$$

$$(V_2 - V_0) / (V_0 - V_1) = (\omega_2 - \omega_0) / (\omega_0 - \omega_1)$$

wherein $T_1$ is an appropriate time interval corresponding to the rotational speed $\omega_1$ and $V_1$ is the amount of lubricant required, $T_2$ is an appropriate time interval corresponding to the rotational speed $\omega_2$, and $V_2$ is an appropriate supply quantity at one time corresponding to the rotational speed $\omega_2$;

calculating an appropriate lubricant supply time interval and an appropriate lubricant supply quantity at one time that correspond to the rotational speed by the input signal in accordance with the proportional-distribution calculation; and

issuing a command to a lubricant supply device.

The present invention will now be described with reference to the accompanying drawings in which:

Fig. 1 (a) shows a side sectional view of a first example of a lubricant supply device in the direction in which the lubricant is emitted;
Fig. 1(b) is a side sectional view perpendicular to Figure 1 (a).
Fig. 2(a) is a graph for explaining the calculation of proportional distribution in a second example in accordance with the invention and showing the relationship between angular velocity and an appropriate time interval;
Fig. 2(b) shows the relationship between angular velocity and an appropriate supply for the second example;
Fig. 3 is a block diagram for explaining a third example;
Fig. 4(a) is a side sectional view showing a structure to which a method of the present invention may be applied, in which a rotor is disposed as an inner part;
Fig. 4(b) shows a case where the rotor is disposed at an outer part.

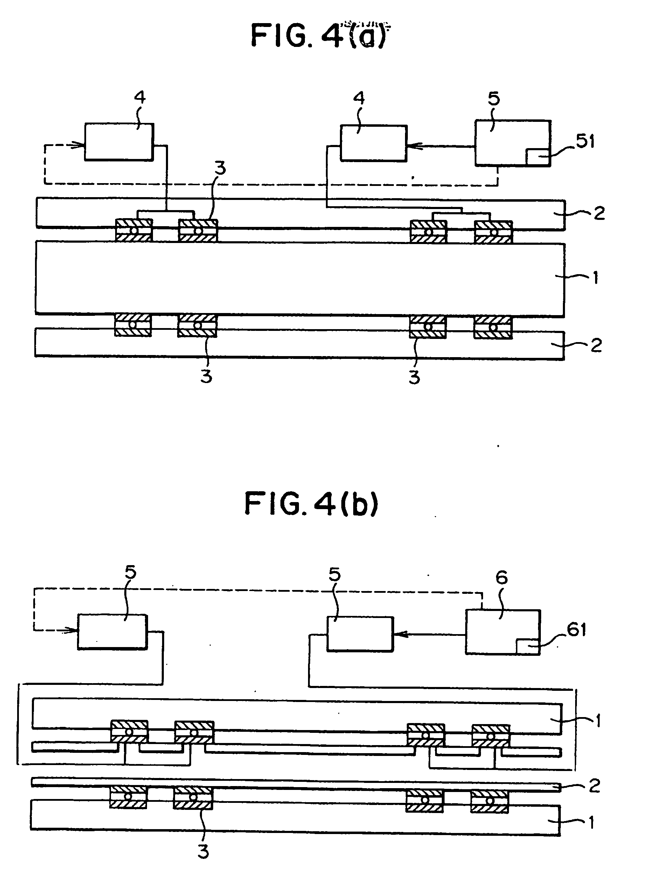

As shown in Fig. 4(a), the rotational device that realizes the method for the present invention that comprises an outer stator 2 and an inner rotor 1 or (see Fig 4(b)) an outer rotor land an inner stator 2. In both cases, a rotational bearing 3 lies between the rotor 1 and the stator 2.

Either or both of the lubricant supply time at predetermined time intervals and/or the amount of lubricant supplied at one time are determined in accordance with the speed of the rotational bearing 3.

In practice, according to the angular velocity of the rotor 1, a command concerning an appropriate time interval stored in a memory 51 and the measurement of the amount of lubricant supplied at one time is transmitted to the lubricant supply device 4 by means of a computer 5.

The only way to determine the appropriate time interval and the appropriate supply quantity at one time for lubricating each rotational bearing 3 in accordance with a predetermined angular velocity is to perform trial-and-error experiments. The appropriate time interval and the appropriate supply quantity cannot be calculated at one try by a specific theory.

Needless to say, the appropriate time interval and amount of lubricant required fall within a certain range, and they are not limited to specific values. On the other hand, there is a correlation between the time interval with which the lubricant is supplied and amount of lubricant required. The shorter the time interval, the smaller the quantity required. The two stand in a roughly proportional relationship.

If the quantity of lubricant supplied at one time is too great, the very existence of the lubricant in a rotational bearing causes friction, and raises the temperature of the rotational bearing immediately after the lubricant is supplied.

Therefore, with respect to each rotational bearing 3, the upper limit of the lubricant supply quantity at one time is based on whether the temperature rises sharply or not immediately after the lubricant is supplied, and this upper limit is confirmed beforehand by an experiment.

However, the time interval and quantity of lubricant supplied at one time is not limited to the aforementioned maximum time interval and the upper limit of the supply quantity.

In other words: it is possible to establish an appropriate supply condition in such a way so as to set a standard for a time interval shorter than the maximum time interval and so as to have the amount of lubricant required smaller than the upper limit on the amount of lubricant required.

If an interval shorter than the maximum time interval is set as a standard, a supply quantity at one time that corresponds to the standardized time interval can be calculated according to the formula: (standardized time interval) ÷ (maximum time interval) × (upper limit of the aforementioned supply quantity at one time), the reason being that there is a roughly proportional relationship between time interval and amount of lubricant required.

The amount of lubricant required obtained by the above calculation corresponds to a minimum value of the amount of lubricant required under the condition of the desired time interval as a result of dividing by the maximum time interval.

If the lubricant supply quantity at one time is successively increased to be greater than the minimum value under the condition of the standardized time interval, the rotational bearing 3 will be gradually filled with the lubricant, and the temperature of the rotational bearing 3 will gradually rise when the lubricant present becomes too large.

Therefore, the lubricant supply quantity present just before a rise in temperature corresponds to a maximum value of an appropriate supply quantity under the standardized time interval.

Accordingly, if a time interval shorter than the maximum time interval is set as a standard, a minimum value obtained according to the above formula, a maximum value confirmed by the above experiment, and an intermediate value between the two correspond to the appropriate lubricant supply quantity at one time, can be set.

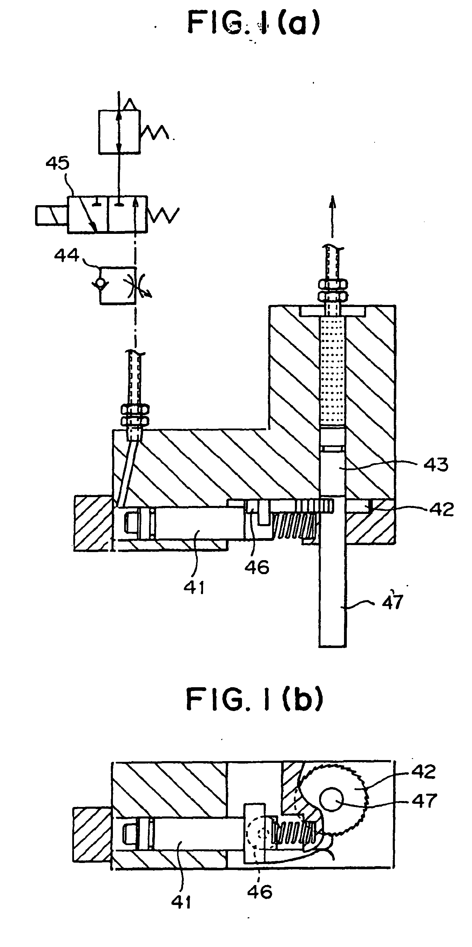

Figure 1 shows the structure of a preferred lubricating device. It comprises a ratchet 42, rotated by an air cylinder 41 that moves a ratchet pawl 46. A screw-threaded piston 43 is disposed at an end of a screw 47 that is slightly moved by the screw 47 that is disposed at the centre of the ratchet 42. As a result, a small quantity of the lubricant is emitted, and thereby the lubricant can be supplied at predetermined time intervals.

A gear rotated by a pulse motor can replace the ratchet 42.

If a flow rate control valve 44 is disposed in an operating circuit of the air cylinder 41 as shown in Fig. 1, the supply of the lubricant can be brought into a sluggish state. Such a sluggish supply is effective especially when a highly viscous lubricant, such as grease, is used.

When a highly viscous lubricant like grease is supplied, the necessary quantity of the lubricant cannot be completely emitted by the rapid movement of the piston 43 because of the resistance of the pipeline. However, if air is supplied by the flow rate control valve 44 while taking much time as shown in Fig. 1, the necessary quantity of lubricant can be emitted.

In the second example, the computer 5 calculates an appropriate time interval and an appropriate amount of lubricant with respect to the arbitrary revolving speed of each individual rotational bearing 3 in order to automate the lubricant supply method.

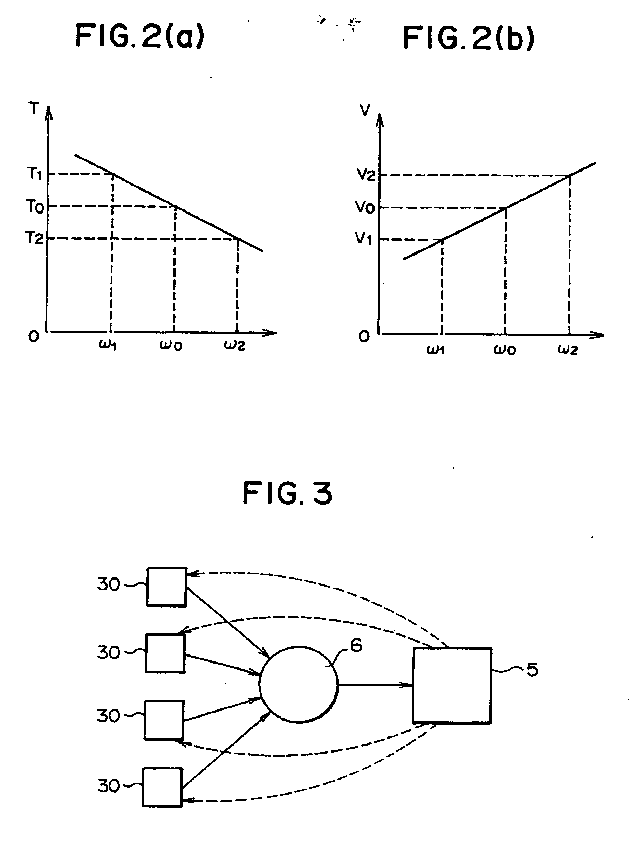

This calculation is performed as follows. An appropriate time interval and amount of lubricant are preset with respect to a plurality of angular velocities. When an input signal corresponding to a specific angular velocity $\omega$ is sent to the computer 5, the rotational bearing 3 selects preset angular velocities on both sides that are nearest to the angular velocity according to the input signal, i.e., a maximum value $\omega_1$ of angular velocities smaller than the angular velocity according to the input signal and a minimum value $\omega_2$ of angular velocities greater than the angular velocity according to the input signal, from among the plurality of stored angular velocities as shown in the graph of Fig. 2. In order to obtain an appropriate time interval $T_0$ corresponding to the angular velocity $\omega_0$ according to the input signal and obtain an appropriate supply quantity $V_0$ at one time, calculation of proportional distribution is performed according to the following formulae as shown in (a) and (b) of Fig. 2:

$$(T_1 - T_0) / (T_0 - T_2) = (\omega_0 - \omega_1) / (\omega_2 - \omega_0)$$

$$(V_2 - V_0) / (V_0 - V_1) = (\omega_2 - \omega_0) / (\omega_0 - \omega_1)$$

Thereafter, the following formulae are obtained:

$$T_0 = \{T_1 (\omega_2 - \omega_0) + T_2 (\omega_0 - \omega_1)\} / (\omega_2 - \omega_1)$$

$$V_0 = \{V_1 (\omega_2 - \omega_0) + V_2 (\omega_0 - \omega_1)\} / (\omega_2 - \omega_1)$$

where $T_1$ is an appropriate time interval corresponding to the angular velocity $\omega_1$, $V_1$ is the amount of lubricant required, $T_2$ is an appropriate time interval corresponding to the angular velocity $\omega_2$, and $V_2$ is the amount of lubricant required.

From this calculation an empirical rule exists where an appropriate time interval and amount of lubricant required can be set with respect to various rotational speeds.

In a third example, shown in Figure 3, a single computer 5 is used for a plurality of rotational devices and a plurality of corresponding rotational bearings 3, thus improving the set up discussed in the second example that employs a system in which time interval and amount of lubricant required are determined according to calculations, and in which the computers 5 are assigned to the plurality of rotational bearings 3, respectively.

However, the computer 5 of example 2 cannot receive angular velocity signals from each of a plurality of rotational bearings and perform calculations simultaneously.

In the third example, the single computer 5 is connected to the plurality of rotational bearings 3 through a discrimination circuit 6. Each rotational bearing 3 transmits a angular velocity signal and a discrimination signal to the discrimination circuit 6. The discrimination circuit 6 has a circuit component that determines the order in which the respective signals have been input.

If the respective signals are received at different times, a step of temporarily storing the signals in the memory 51 in the order of reception is executed. Alternatively, the signals are transmitted to the computer 5 without executing this signal-storing step. If some or all of the signals are received at the same time, the angular velocity signals and the discrimination signals that are received at the same time are stored in the memory 51, and the order of the input signals from each of the rotational bearings 3 that are received at the same time is determined according to the order predetermined by a program, and the signals received at the same time are transmitted to the computer 5 in the determined order.

In order to supply the lubricant on the basis of the signals the computer 5 can perform calculation of an appropriate time interval and an appropriate amount of lubricant, and can transmit output signals resulting from the calculation to each rotational bearing 3 on the basis of the discrimination signals sent from rotational bearings vis the discrimination circuit 6.

As described above, in the third example, the angular velocity signals and the discrimination signals are sequentially input from the discrimination circuit 6 to the computer 5 according to a predetermined order, and a given calculation is performed even if the angular velocity signals are input from the rotational bearings 3 at the same time. Therefore, serious obstacles do not arise in controlling an appropriate time interval and amount of lubricant required.

In the present invention the lubricant can be supplied rationally and appropriately and thus accidents due to wear of a rotational bearing can be prevented and the rotational bearing can be safely operated for a long time.

Especially in the device of example one, the present invention can be suitably applied to the lubricant supply, and appropriate processing can be applied to a highly viscous lubricant such as grease.

According to the computer processing of example two, automatic control can be carried out for an appropriate time interval and an appropriate supply quantity with respect to various angular velocities. According to the system of the third example, a single computer can operate a plurality of rotational bearings extremely economically.

**Claims**

**Claims for the following Contracting State(s): DE, FR, GB, IT**

1. A method for lubricating a rotational device, the rotational device having an inner part (1) and an outer part (2) in which one of the inner part and outer part is fixed, and the other of the inner part and outer part is rotated, and a rotational bearing (3) lying between the inner and outer parts, **characterised by** the steps of:

    supplying a predetermined quantity of lubricant to the rotational bearing (3) at predetermined time intervals, and adjusting either or both of the time interval and/or the amount of lubricant supplied at one time in accordance with a rotational speed of the rotational bearing,
    further comprising the steps of:

        prestoring both a lubricant supply time interval and the lubricant supply quantity at one time that correspond to a plurality of rotational speeds in accordance with a rotational speed of the rotational bearing (3),
        standardizing a corresponding time interval $T_0$ and a corresponding supply quantity $V_0$ at one time for a minimum value of a rotational speed $\omega_2$, larger than a rotational speed $\omega_0$ input to a computer and a maximum value of a rotational speed $\omega_1$, smaller than said rotational speed $\omega_0$,
        wherein said rotational speeds $\omega_1$ and $\omega_2$ are input to the computer as a plurality of rotational speeds prestored with respect to an input signal denoting an actual rotational speed maintained for each rotational bearing;
        performing the following proportional distribution calculation:

$$(T_1 - T_0) / (T_0 - T_2) = (\omega_0 - \omega_1) / (\omega_2 - \omega_0)$$

$$(V_2 - V_0) / (V_0 - V_1) = (\omega_2 - \omega_0) / (\omega_0 - \omega_1)$$

        wherein $T_1$ is an appropriate time interval corresponding to the rotational speed $\omega_1$ and $V_1$ is the amount of lubricant required, $T_2$ is an appropriate time interval corresponding to the rotational speed $\omega_2$, and $V_2$ is an appropriate supply quantity at one time corresponding to the rotational speed $\omega_2$;
        calculating an appropriate lubricant supply time interval and an appropriate lubricant supply quantity at one time that correspond to the rotational speed by the input signal in accordance with the proportional-distribution calculation; and

issuing a command to a lubricant supply device.

## Patentansprüche

1.  Verfahren zum Schmieren einer Rotationsvorrichtung, wobei die Rotationsvorrichtung einen inneren Teil (1) und einen äußeren Teil (2) umfasst, bei dem der innere Teil oder der äußere Teil fest ist, und der jeweils andere Teil rotiert wird, sowie ein zwischen dem inneren und dem äußeren Teil liegendes Rotationslager (3), welches durch die folgenden Schritte gekennzeichnet ist:

    Zuführen einer vorbestimmten Schmiermittelquantität an das Rotationslager (3) in vorbestimmten Zeitintervallen, und
    Anpassen eines von beiden oder beider des Zeitintervalls und/oder der zu einem Zeitpunkt zugeführten Schmiermittelmenge gemäß einer Des Rotationslagers,
    welches weiter die Schritte umfasst:

    Vorspeichern sowohl eines Schmiermittelzuführzeitintervalls als auch der Schmiermittelzuführquantität zu einem Zeitpunkt, die mehreren Drehgeschwindigkeiten gemäß einer Drehgeschwindigkeit des Rotationslagers (3) entsprechen,
    Standardisieren eines entsprechenden Zeitintervalls $T_0$ und einer entsprechenden Zuführquantität $V_0$ zu einem Zeitpunkt für einen Minimalwert einer Drehgeschwindigkeit $\omega_2$, die größer als eine in einen Computer eingegebene Drehgeschwindigkeit $\omega_0$ ist, und einen Maximalwert einer Drehgeschwindigkeit $\omega_1$, die kleiner als die Drehgeschwindigkeit $\omega_0$ ist,
    wobei die Drehgeschwindigkeiten $\omega_1$ und $\omega_2$ in den Computer eingegeben werden als mehrere Drehgeschwindigkeiten, die in Bezug auf ein Eingabesignal vorgespeichert werden, das eine tatsächliche, für jedes Rotationslager gehaltene Drehgeschwindigkeit bezeichnet;
    Durchführen der folgenden Proportionalverteilungsberechnung :

    $$(T_1 - T_0) / (T_0 - T_2) \;=\; (\omega_0 - \omega_1)(\omega_2 - \omega_0)$$

    $$(V_2 - V_0) / (V_0 - V_1) \;=\; (\omega_2 - \omega_0) / (\omega_0 - \omega_1)$$

    wobei $T_1$ ein geeignetes Zeitintervall ist, das der Drehgeschwindigkeit $\omega_1$ entspricht, und $V_1$ die benötigte Menge an Schmiermittel ist, $T_2$ ein geeignetes Zeitintervall entsprechend der Drehgeschwindigkeit $\omega2$, und $V_2$ eine geeignete Zuführquantität zu einem Zeitpunkt entsprechend der Drehgeschwindigkeit $\omega_2$ ist;
    Berechnen eines geeigneten Schmiermittelzuführzeitintervalls und einer geeigneten Zuführquantität zu einem Zeitpunkt, die der Drehgeschwindigkeit durch das Eingabesignal gemäß der Proportionalverteilungsberechnung entsprechen, und
    Ausgeben eines Befehls an eine Schmiermittelzuführvorrichtung.

## Revendications

1.  Procédé pour lubrifier un dispositif rotatif, le dispositif rotatif ayant une partie intérieure (1) et une partie extérieure (2) dans lequel l'une des deux parties, à savoir la partie intérieure ou la partie extérieure est fixe et l'autre de ces parties intérieure et extérieure est rotative, et un palier tournant (3) reposant entre les parties intérieure et extérieure, **caractérisé par** les étapes consistant à :

    fournir une quantité prédéterminée de lubrifiant au palier tournant (3) à des intervalles prédéterminés de temps, et ajuster l'intervalle de temps et/ou la quantité de lubrifiant fournie à un moment en fonction d'une vitesse de rotation du palier tournant,
    comprenant en outre les étapes consistant à :

    enregistrer au préalable à la fois un intervalle de temps d'alimentation en lubrifiant et la quantité fournie de lubrifiant à un moment qui correspondent à une pluralité de vitesses de rotation en fonction d'une vitesse de rotation du palier tournant (3),

normaliser un intervalle correspondant de temps $T_0$ et une quantité fournie $V_0$ correspondante à un moment pour une valeur minimale d'une vitesse de rotation $\omega_2$ plus grande qu'une vitesse de rotation $\omega_0$ entrée dans un ordinateur et une valeur maximale d'une vitesse de rotation mi plus petite que ladite vitesse de rotation $\omega_0$,

lesdites vitesses de rotation $\omega_1$ et $\omega_2$ étant entrées dans l'ordinateur sous la forme d'une pluralité de vitesses de rotation enregistrées au préalable par rapport à un signal d'entrée indiquant une vitesse réelle de rotation maintenue pour chaque palier tournant ;

exécuter le calcul suivant de distribution proportionnelle :

$$(T_1 - T_0) / (T_0 - T_2) = (\omega_0 - \omega_1) / (\omega_2 - \omega_0)$$

$$(V_2 - V_0) / (V_0 - V_1) = (\omega_2 - \omega_0) / (\omega_0 - \omega_1)$$

où $T_1$ est un intervalle approprié de temps correspondant à la vitesse de rotation $\omega_1$ et $V_1$ est la quantité de lubrifiant requis, $T_2$ est un intervalle approprié de temps correspondant à la vitesse de rotation $\omega_2$ et $V_2$ est la quantité fournie appropriée à un moment correspondant à la vitesse de rotation $\omega_2$ ;

calculer un intervalle approprié de temps d'alimentation en lubrifiant et une quantité fournie appropriée de lubrifiant à un moment qui correspondent à la vitesse de rotation par le signal d'entrée en fonction du calcul de distribution proportionnelle ; et

envoyer une commande à un dispositif d'alimentation en lubrifiant.

# FIG. 1 (a)

45

44

43

42

46

41

47

# FIG. 1 (b)

42

47

46

41

# FIG.2(a)

# FIG.2(b)

# FIG. 3

# FIG. 4 (a)

# FIG. 4 (b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1197702 A
- DE 19959472 A
- US 5060760 A